# EUROPÄISCHE PATENTSCHRIFT

(11) **EP 3 885 322 B1**
(45) Veröffentlichungstag und Bekanntmachung des Hinweises auf die Patenterteilung: **01.05.2024**
(21) Anmeldenummer: 21160480.6
(22) Anmeldetag: 03.03.2021
(51) Int. Cl.: C02F 1/32

(54) **VORRICHTUNG ZUM DESINFIZIEREN EINES FLUIDS**
DEVICE FOR DISINFECTING A FLUID
DISPOSITIF DE DÉSINFECTION D'UN FLUIDE

(30) Priorität: 25.03.2020 DE 102020108265
(43) Veröffentlichungstag der Anmeldung: 29.09.2021
(73) Patentinhaber: Hytecon AG, 6006 Luzern (CH)
(72) Erfinder: KLINK, Maximilian, 6006 Luzern (DE)
(74) Vertreter: Bittner, Thomas L.

(56) Entgegenhaltungen:
- WO-A1-2019/025199
- CN-A- 105 822 923
- CN-A- 109 052 553
- DE-A1-102014 012 217
- US-A1- 2015 284 266

## Beschreibung

Die Erfindung betrifft eine Vorrichtung zum Desinfizieren eines Fluids, insbesondere Wasser.

### Hintergrund

Es sind Vorrichtungen zur Wasserbehandlung, insbesondere zum Desinfizieren von Wasser bekannt, beispielsweise zur Bereitstellung von sauberem Trinkwasser. Das zu desinfizierende Wasser, welches beispielsweise durch Mikroorganismen verunreinigt ist, wird in einen Reaktorraum eingeleitet, dort desinfiziert und verlässt nach dem Desinfizieren den Reaktorraum zur weiteren Verwendung. Ein wirksames Mittel zum Eliminieren der Mikroorganismen ist neben einer chemischen Behandlung das Bestrahlen des Wassers mit ultraviolettem Licht (UV-Licht). Beispielsweise wird UV-Licht mittels Quecksilberdampflampen erzeugt und in den Reaktorraum eingestrahlt, sodass das durchströmende Wasser dem UV-Licht ausgesetzt ist.

Vorrichtungen zur UV-Wasserbehandlung sind beispielsweise aus US 2015/0158741 A1 bekannt, beispielsweise als Aufsatz für einen Wasserhahn oder als Einsatz für ein Gefäß. Das Desinfizieren von Wasser kann mittels UV-Licht erfolgen, welches durch UV-LEDs erzeugt wird. Die UV-LEDs können auf einem Trägerkörper angeordnet sein, welcher in einer Kartusche montiert ist, sodass er sich von einer Seite in einen Reaktorraum hinein erstreckt. Weitere Filter können neben der UV-Wasserbehandlung vorgesehen sein.

Das Dokument WO 2019 / 025 199 A1 betrifft eine Desinfektionsanlage für zu desinfizierende Fluide, aufweisend: einen im Wesentlichen zylindrischen Gehäusekörper mit einem Einlass und einem Auslass, wobei der zylindrische Gehäusekörper innenseitig einen ringförmigen Reaktionsraum, der einen zylindrischen Innenraum umgibt, sowie eine LED-basierte UV-Lichtquelle zur Bestrahlung des den ringförmigen Reaktionsraum durchströmenden zu desinfizierenden Fluids aufweist, wobei der zylindrische Gehäusekörper i) aus einem UVtransparentem Glas besteht und auf seiner Außenwand eine nach innen gerichtete Verspiegelung aufweist, oder ii) aus einem Material besteht ausgewählt aus der Gruppe Glas, Kunststoff und/oder Metall und auf seiner Innenwand eine UV-Licht reflektierende Beschichtung aufweist, und wobei die LED-basierte UV-Lichtquelle iii) in dem zylindrischen Innenraum, oder iv) an einer Außenwand des zylindrischen Innenraums, kühlbar angeordnet ist.

In dem Dokument US 2015 / 284 266 A1 wird ein UV-Sterilisator bereitgestellt, der als Lichtquelle eine tief ultraviolette lichtemittierende Diode verwendet, die im Vergleich zu Quecksilberlampen einen geringen Stromverbrauch und eine lange Lebensdauer aufweist, wobei dieser kompakte und leicht zu wartende Sterilisator in der Lage ist, einen zu sterilisierenden Körper mit hochintensivem tief ultraviolettem Licht für eine effiziente Sterilisation zu bestrahlen.

Das Dokument DE 10 2014 012 217 A1 offenbart ein Lampenmodul für photochemische Reaktoren und einen solchen Photoreaktor. Dokument CN 105 822 923 A betrifft eine LED-Lampenröhre für eine lichtkatalysierte Reaktion.

### Zusammenfassung

Aufgabe der Erfindung ist es, eine verbesserte Vorrichtung zum Desinfizieren eines Fluids bereitzustellen.

Zur Lösung ist eine Vorrichtung mit den Merkmalen des unabhängigen Anspruchs 1 geschaffen. Weiterbildungen und vorteilhafte Ausführungsbeispiele sind Gegenstand der abhängigen Ansprüche.

Nach einem Aspekt ist eine Vorrichtung zum Desinfizieren eines Fluids geschaffen, insbesondere Wasser, welche Folgendes aufweist: ein Reaktorgehäuse mit einem Eingang zum Eintritt und einem Ausgang zum Austritt eines zu desinfizierenden Fluids; einen Reaktorraum, welcher in dem Reaktorgehäuse gebildet und eingerichtet ist, das zu desinfizierende Fluid aufzunehmen, sodass dieses den Reaktorraum entlang einer Durchflussstrecke vom Eingang zum Ausgang durchströmt; eine UV-Bestrahlungseinrichtung mit einer Mehrzahl von UV-LEDs und einen länglichen Trägerkörper, auf dem die UV-LEDs angeordnet sind und der eingerichtet ist, sich zumindest teilweise in das Reaktorgehäuse hinein zu erstrecken, sodass mittels der UV-LEDs UV-Licht zum Desinfizieren des Fluids entlang der Durchflussstrecke in den Reaktorraum einstrahlbar ist. Der Trägerkörper ist in dem Reaktorgehäuse lösbar und wechselbar montiert und weist einen Kühlmitteldurchgang auf, welcher sich durch den Trägerkörper hindurch erstreckt und zum Kühlen der UV-LEDs von einem Kühlmittel durchströmbar ist

Der längliche Trägerkörper erlaubt eine Verteilung der UV-LEDs entlang der Durchflussstrecke, sodass das zu desinfizierende Fluid ausreichend lange dem UV-Licht ausgesetzt ist. Der Trägerkörper ist lösbar in dem Reaktorgehäuse montiert, mit anderen Worten kann aus dem Reaktorgehäuse herausgenommen und auch wieder eingesetzt werden, beispielsweise zu Wartungs- oder Reparaturzwecken, oder ausgewechselt werden, um die UV-Bestrahlungseinrichtung gegen eine andere auszutauschen, z.B. aufgrund von Alterung der Lichtquelle oder gegen eine Bestrahlungseinrichtung mit einer anderen Anzahl und/oder Anordnung von UV-LEDs, UV-LEDs anderer Wellenlänge oder dergleichen. Es ist eine effiziente Wasserbehandlung mittels des UV-Lichts auch dadurch gewährleistet, dass trotz der Wechselbarkeit der UV-Lichtquelle eine Kühlung der UV-LEDs mit einem gewünschten Kühlmittel, insbesondere einem flüssigen Kühlmittel, wie Wasser, vorgesehen ist.

Der Trägerkörper kann zumindest teilweise aus einem wärmeleitfähigen Material gebildet sein, sodass im Betrieb entstehende Wärme von den UV-LEDs auf ein Kühlmittel, welches den Kühlmitteldurchgang durchströmt, übertragbar ist und auf diese Weise abgeführt wird. Insbesondere kann der Trägerkörper aus Aluminium bestehen. Andere Materialien, insbesondere Metalle, mit hoher Wärmeleitfähigkeit können ebenso verwendet werden.

Der Trägerkörper kann derart in dem Reaktorgehäuse montiert sein, dass er sich im Inneren des Reaktorgehäuses beabstandet von einer Reaktorgehäusewandung erstreckt, sodass UV-Licht von den UV-LEDs in Richtung der Reaktorgehäusewandung abstrahlbar ist.

Der Trägerkörper kann sich entlang einer Mittellängsachse des Reaktorraums erstrecken, sodass das UV-Licht radial von innen nach außen abgestrahlt werden kann. Die UV-LEDs können hierzu auf dem Trägerkörper in Umfangsrichtung des Trägerkörpers gleichmäßig verteilt angeordnet sein. Durch eine innenliegende, insbesondere mittige Anordnung der UV-Lichtquelle kann so eine gleichmäßige Bestrahlung des zu desinfizierenden Fluids mit nur einer Lichtquelle erreicht werden. Es versteht sich, dass auch mehrere Lichtquellen vorgesehen sein können. Diese können ebenso wechselbar oder auch fest installiert und anders aufgebaut sein.

Der Trägerkörper kann eingerichtet, d.h. entsprechend bemessen und geformt sein, sich in einer Längsrichtung vollständig durch das Reaktorgehäuse bzw. den Reaktorraum hindurch zu erstrecken. Das heißt, die UV-Lichtquelle kann sich auf der ganzen Länge des Reaktor-raums erstrecken. Es versteht sich, dass sie alternativ auch kürzer sein kann, d.h. sich nur entlang eines Teils der Länge des Reaktorraums erstrecken kann.

Der Trägerkörper kann stabförmig ausgebildet sein. Er kann eine polygonale oder runde Querschnittsform aufweisen. Beispielsweise kann der Trägerkörper im Querschnitt dreieckig, viereckig, fünfeckig, sechseckig usw. sein, wobei dann auf jeder der entsprechenden Seiten UV-LEDs, z.B. auf einem entsprechenden Trägermodul angeordnet sein können.

Zur Kühlung der UV-LEDs ist wie oben erwähnt ein Kühlmitteldurchgang in dem Trägerkörper vorgesehen. Dieser erstreckt sich von einem Kühlmitteleingang zu einem Kühlmittelausgang, welche beide an demselben Ende des Trägerkörpers angeordnet sind. Dies vereinfacht den Anschluss eines Kühlmittelkreislaufs und damit insbesondere auch die Wechselbarkeit der UV-Lichtquelle.

Der Kühlmitteldurchgang umfasst einen ersten Abschnitt, welcher sich von dem Kühlmitteleingang erstreckt, und einen zweiten Abschnitt, welcher sich zu dem Kühlmittelausgang hin erstreckt, wobei der erste (oder "einleitende") Abschnitt im Inneren des zweiten (oder "ableitenden") Abschnitts verläuft. Das Kühlmittel kann somit für eine effektive Kühlung entlang des kompletten Umfangs auf der Rückseite der UV-LEDs entlangströmen. Diese Anordnung erleichtert auch ein Entweichen von Luft aus dem Kühlmitteldurchgang.

In einer nicht zur vorliegenden Erfindung gehörenden Ausführungsform kann es sich bei Beidem Kühlmittel um das zu desinfizierende Fluid selbst handeln, welches vor oder nach der Desinfektion den Trägerkörper, d.h. den Kühlkörper kühlt und wieder in den Kreislauf zurückgeführt wird. Gemäß der Erfindung wird ein externer Kühlkreislauf zum Kühlen verwendet, welcher über einen Wärmetauscher mit dem zu desinfizierenden Fluid verbunden ist, um so die Wärme abzutransportieren. In einer nicht zur vorliegenden Erfindung gehörenden Ausführungsform kann der Kühlkreislauf ein separates Kühlgerät enthalten.

Insbesondere bei der Verwendung eines externen Kühlkreislaufs ist eine Warmwasseranwendung möglich, z.B. zur Inaktivierung von Legionellen.

Es ist ein Quarzglasrohr vorgesehen, welches eingerichtet ist, den Trägerkörper zu umgeben, um einen direkten Kontakt eines zu desinfizierenden Fluids mit den UV-LEDs zu verhindern. Das Quarzglasrohr bildet somit ein Hüllrohr zum Schutz der UV-LEDs. Insbesondere bildet das Quarzglasrohr eine innere Begrenzung des Reaktorraums, welcher das Quarzglasrohr und die im Quarzglasrohr angeordnete UV-Lichtquelle umgibt, während die Reaktorgehäusewandung eine äußere Begrenzung des Reaktorraums bildet. Das Quarzglasrohr ist ebenso wie der Trägerkörper mit den UV-LEDs und zusammen mit dem Trägerkörper austauschbar. In einer nicht zur vorliegenden Erfindung gehörenden Ausführungsform kann es alternativ auch in dem Reaktorgehäuse fest fixiert sein. Insbesondere ist eine Reinigung des Quarzglasrohrs üblicherweise nicht notwendig, da eine Belagsbildung auf dem Quarzglas üblicherweise nicht auftritt, da LEDs im Gegensatz zu Gasentladungslampen auf der dem Reaktorraum zugewandten Seite kalt bleiben und somit das Quarzglas nicht erwärmen.

Es versteht sich, dass unabhängig davon insgesamt vorgesehen sein, beispielsweise durch abschraubbare Flansche, Anschlussstücke und dergleichen sowohl eine mechanische als auch chemische Reinigung der Vorrichtung zu erlauben. Beispielsweise kann das Reaktorgehäuse über Anschlüsse für Reinigungsmittel wie z.B. Chlor oder Ozon verfügen.

Das Reaktorgehäuse kann als Durchflussrohr ausgebildet sein, wobei der Eingang an einem ersten Ende des Durchflussrohrs und der Ausgang an einem gegenüberliegenden zweiten Ende des Durchflussrohrs angeordnet sein können. Das Reaktorgehäuse kann so ausgebildet sein, dass es in beiden Richtungen durchströmbar ist, d.h. Eingang und Ausgang können je nach Anwendung vertauscht sein.

Zumindest einer des Eingangs und des Ausgangs, vorzugsweise sowohl der Eingang als auch der Ausgang, ist bzw. sind vorzugsweise derart seitlich an dem Reaktorgehäuse angeordnet, dass ein zu desinfizierendes Fluid derart durch den Reaktorraum strömt, dass die Durchflussstrecke im Wesentlichen spiralförmig um den Trägerkörper herum verläuft. Das zu desinfizierende Fluid kann so mehrfach an der UV-Lichtquelle vorbei bzw. um sie herum strömen, wodurch eine hohe UV-Dosis applizierbar ist. Insbesondere, wenn der Eingang derart seitlich am Reaktorgehäuse angeordnet ist, kann das Fluid in zumindest teilweise tangentialer Richtung in den Reaktorraum einströmen, um die Ausbildung der spiralförmigen Strömung zu unterstützen.

Der Eingang und Ausgang können beide in die gleiche Richtung quer, insbesondere senkrecht zur Längsachse weisen. Der Eingang und Ausgang können dabei in einer Draufsicht in Längsrichtung im Wesentlichen deckungsgleich, d.h. an der gleichen Position entlang des Umfangs des Reaktorgehäuses, oder versetzt angeordnet sein. Der Eingang und Ausgang können aber auch in verschiedene Richtungen quer zur Längsachse des Reaktorgehäuses weisen. Vorteilhaft sind der Eingang und der Ausgang auch hier so angeordnet, dass sich eine spiralförmige Strömung im Reaktorraum ausbildet.

Alternativ kann vorgesehen sein, dass nur der Eingang oder nur der Ausgang quer, insbesondere senkrecht zur Längsachse, vorzugsweise in einer tangentialen Richtung angeordnet ist, und entsprechend der andere des Eingangs und Ausgangs in Längsrichtung weist, insbesondere entlang der Mittellängsachse verläuft. Der Eingang und/oder der Ausgang können bzw. kann in einem entsprechenden Anschlussstück gebildet sein, welches eine sich entlang der Strömungsrichtung stufenlos ändernde Querschnittsfläche aufweist. Mit anderen Worten, zur Verbesserung der Strömung können die Anschlussstücke abgerundet sein, insbesondere für den Fall, dass der entsprechende Anschluss in Längsrichtung weist. Auch in diesem Fall sind der Eingang und Ausgang so angeordnet, dass sich eine spiralförmige Strömung im Reaktorraum ausbildet.

Eine an den Reaktorraum grenzende Oberfläche des Reaktorgehäuses, d.h. insbesondere dessen Innenseite kann zumindest teilweise aus einem UV-Licht diffus reflektierenden Material gebildet sein. Die UV-Strahlung, welche von innen nach außen durch das Wasser strahlt, kann auf diese Weise von reflektierenden Oberflächen diffus reflektiert werden, sodass die UV-Lichtstrahlen mehrfach auf das durchströmende Fluid einwirken können. Beispielsweise kann die Innenseite des Reaktorgehäuses mit PTFE ausgekleidet sein, wobei das PTFE vorteilhaft eine Schichtdicke von mindestens 1 mm aufweist. Das Reaktorgehäuse selbst kann dagegen aus wasser- und UV-beständigen sowie strukturell nicht verformbaren Materialien wie z.B. Edelstahl oder Kunststoff hergestellt sein.

Die Vorrichtung kann des Weiteren zumindest einen UV-Sensor zum Erfassen einer Strahlungsintensität des von den UV-LEDs abgestrahlten UV-Lichts aufweisen. Ferner kann eine Auswerteeinheit vorgesehen sein, welche eingerichtet ist, die Strahlungsintensität in Abhängigkeit eines Signals der UV-Sensoren zu steuern. Es kann insbesondere eine automatische Strahlerkennung vorgesehen sein, wobei Betriebsstunden überwacht und gesteuert werden, sowie bei Überschreitung einer maximalen Nutzungsdauer ein Hinweis oder Alarm ausgegeben werden kann. Die Steuerung kann über RFID-Technologie erfolgen.

Die UV-Sensoren können zur Überwachung der Strahlungsintensität und Angabe der Intensität in W/m² eingerichtet und mit der Auswerteeinheit verbunden sein. Diese kann die Strahlungsintensität als ein Integral über die Zeit in einen UV-Dosiswert umrechnen sowie mögliche Veränderung der Wasserqualität wie z.B. Verschlechterung der UV-Transmission oder eine Belagsbildung auf dem Quarzglashüllrohr und/oder der Reaktorgehäusewandung erfassen. Die Strahlungsleistung kann über die Auswerteeinheit sowie über das Netzteil anpassbar sein. Entsprechend der Anwendung können Position und Anzahl der Sensoren variieren. Die Sensoren können im Betrieb austauschbar sein. Sie können z.B. durch ein Loch im Reaktor angebracht werden oder auf dem Trägermodul der LEDs angeordnet sein. Die UV-Sensoren können somit entweder die direkte Strahlung, wenn sie im Reaktor angebracht sind, oder nach zweimaligen durchqueren des Fluids, wenn sie auf dem Trägermodul angebracht sind, erfassen. Da das Strahlungsfeld durch die UV-LEDs homogen ist, kann die Auswerteeinheit ausgehend von den in dem Sensorbereich detektierten Werten, diese über das gesamte homogene UV-Strahlungsfeld extrapolieren. Es kann dann vorgesehen sein, dass die Auswerteeinheit bei Unterschreitung eines Minimalwertes der UV-Intensität einen Alarmwert ausgibt.

### Beschreibung von Ausführungsbeispielen

Im Folgenden wird die Erfindung unter Bezugnahme auf die Zeichnungen beispielhaft näher erläutert. Hierbei zeigen:
- Fig. 1: eine Seitenansicht einer Vorrichtung zum Desinfizieren eines Fluids gemäß einem ersten Ausführungsbeispiel;
- Fig. 2: eine weitere Seitenansicht der Vorrichtung aus Fig. 1
- Fig. 3: eine Schnittansicht der Vorrichtung aus Fig. 1 entlang der Längsachse;
- Fig. 4: eine Schnittansicht der Vorrichtung aus Fig. 1 in Querrichtung;
- Fig. 5: einen vergrößerten Ausschnitt aus Fig. 3;
- Fig. 6: eine Seitenansicht der Vorrichtung aus Fig. 1 mit teilweise herausgezogener Lichtquelle;
- Fig. 7: eine stabförmige Lichtquelle;
- Fig. 8: eine Seitenansicht einer Vorrichtung zum Desinfizieren eines Fluids gemäß einem zweiten Ausführungsbeispiel; und
- Fig. 9: eine Schnittansicht der Vorrichtung aus Fig. 8 entlang der Längsachse.

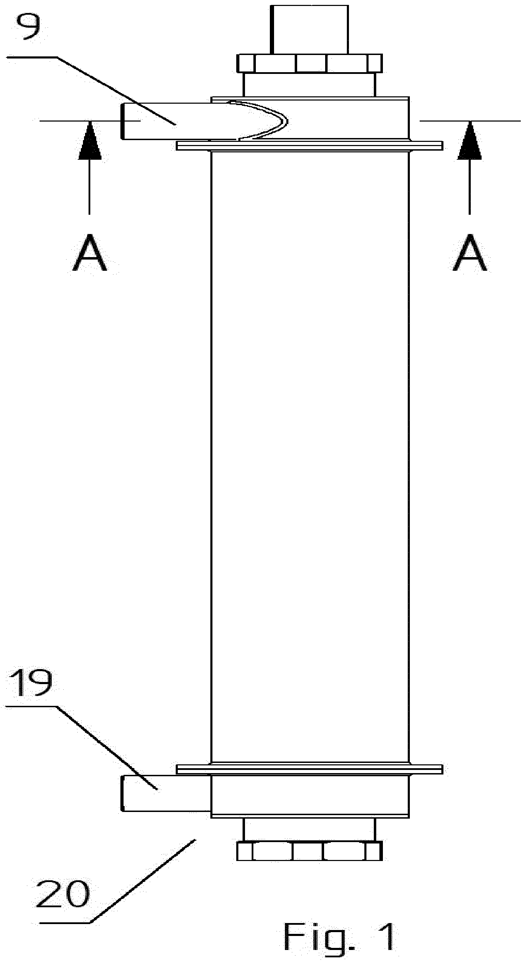

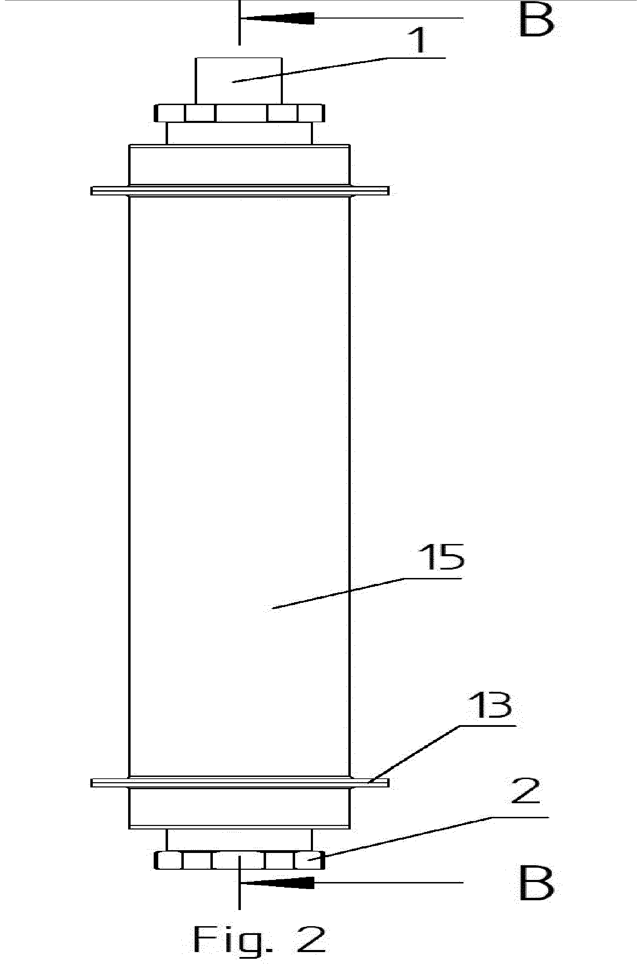

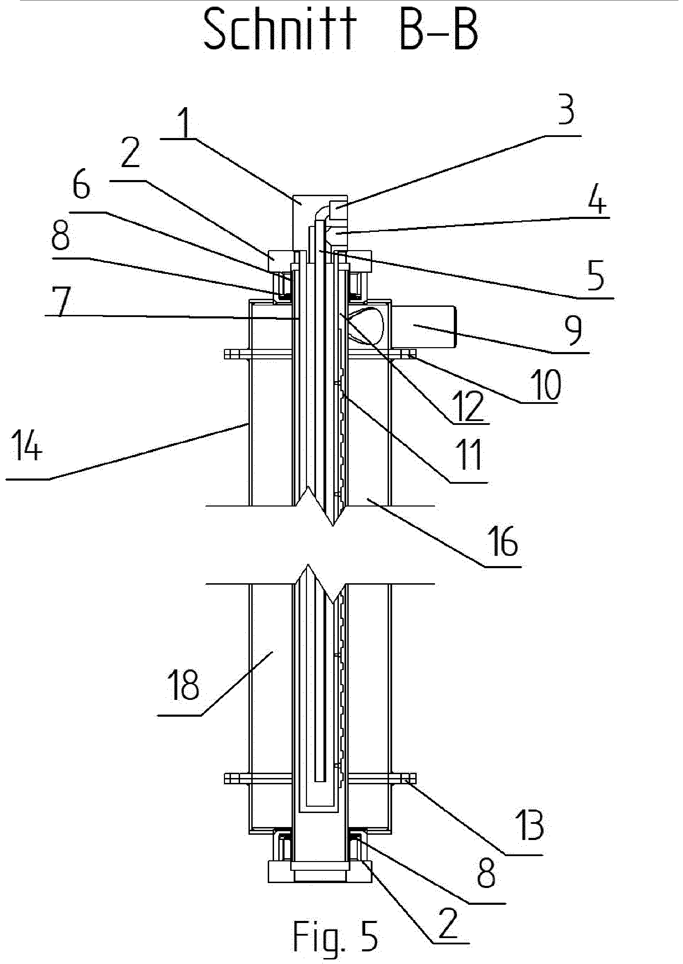

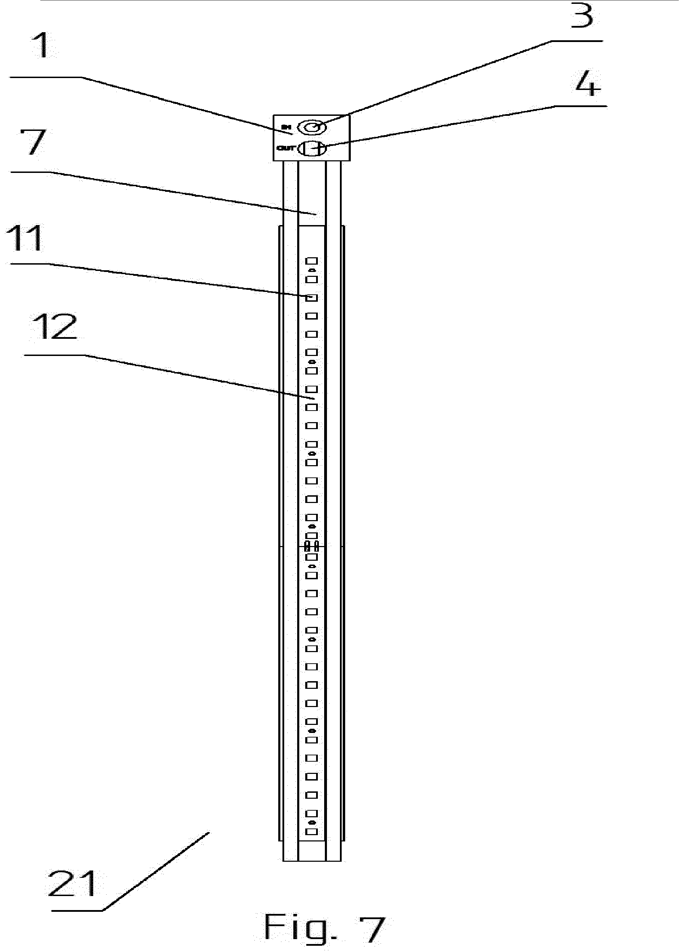

Im Folgenden wird unter Bezugnahme auf Fig. 1 bis 7 ein erstes Ausführungsbeispiel einer Vorrichtung 20 zum Desinfizieren eines Fluids, insbesondere Wasser näher erläutert.

Die Vorrichtung 20, welche auch als Reaktor bezeichnet wird, ist als Durchflussrohr mit einem rohrförmigen Reaktorgehäuse 15 ausgebildet. Ein zu desinfizierendes Fluid, wie Wasser, wird über einen Eingang 19 in einen durch das Reaktorgehäuse 15 gebildeten Reaktorraum 16 eingeleitet und verlässt diesen nach erfolgter Desinfektion über den Ausgang 9. Die Funktion des Eingangs und Ausgangs kann auch vertauscht sein. Die Vorrichtung 20 kann sowohl horizontal als auch vertikal betrieben werden. Das Durchflussrohr kann beispielsweise eine Länge von 30 cm bis 100 cm, vorzugsweise 50 cm bis 60 cm, und einen Durchmesser von 5 cm bis 10 cm aufweisen. Es kann insbesondere zur Installation in einem Wasserleitungssystem vorgesehen sein. Im hier gezeigten Ausführungsbeispiel sind die Anschlüsse für den Eingang 19 und den Ausgang 9 in entsprechenden Endstücken angeordnet, welche über Schraubflansche 10, 13 mit dem rohrförmigen Teil des Reaktorgehäuses 15, welches durch eine Wandung 14 gebildet wird, verbunden sind.

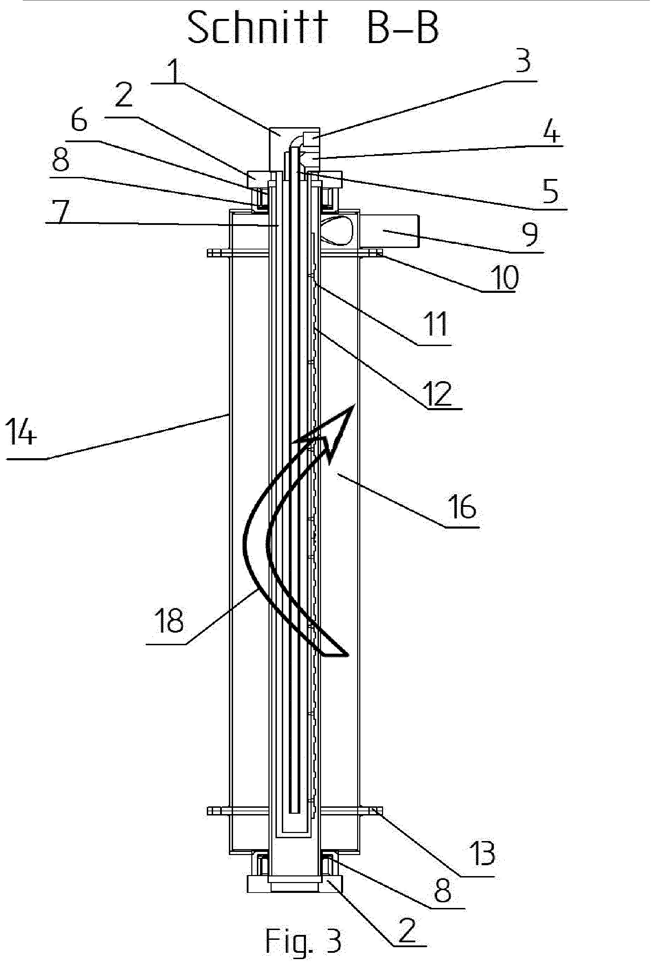

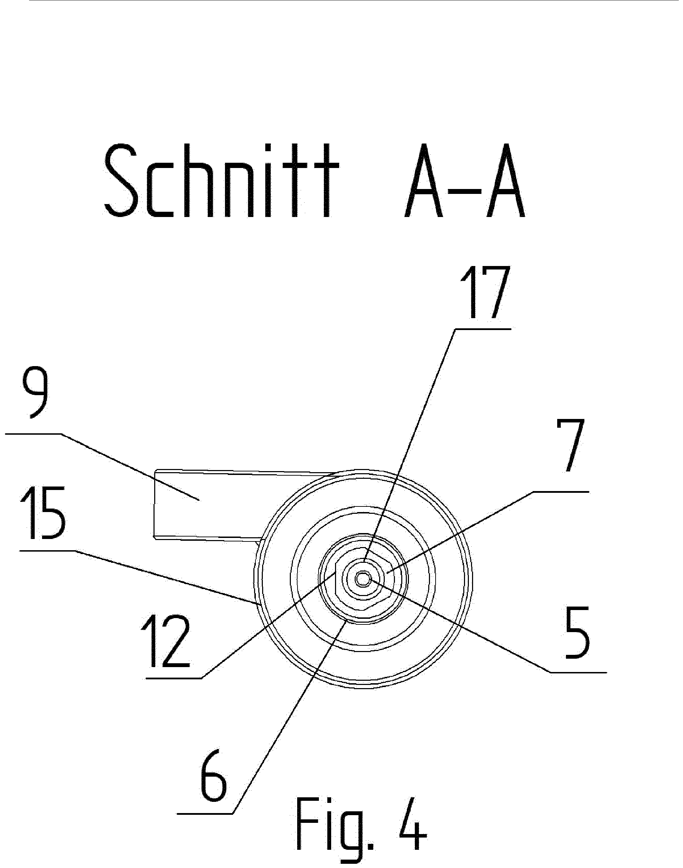

Durch die seitliche Anordnung des Eingangs 19 und Ausgangs 9 wird das Wasser in tangentialer Richtung in den Reaktorraum 16 eingeleitet (vgl. Schnitt in Fig. 4), wodurch eine spiralförmige Strömung, d.h. Durchflussstrecke 18 (siehe Pfeile in Fig. 3) erzeugt wird. Die spiralförmige (helikale) Strömung kann sich nur aufgrund der Anordnung des Eingangs 19 und Ausgangs 9 aufbauen, insbesondere auch da der Reaktorraum 16 im Querschnitt vorzugsweise im Wesentlichen ringförmig ist. Zusätzlich können Fluidleitelemente (nicht dargestellt) im Reaktorraum 16 vorgesehen sein, um eine optimale Hydraulik und damit Verlängerung der Verweilzeit des zu desinfizierenden Fluids im Reaktor 20 zu gewährleisten, um die UV-Lichtbestrahlung optimal zum Desinfizieren zu nutzen.

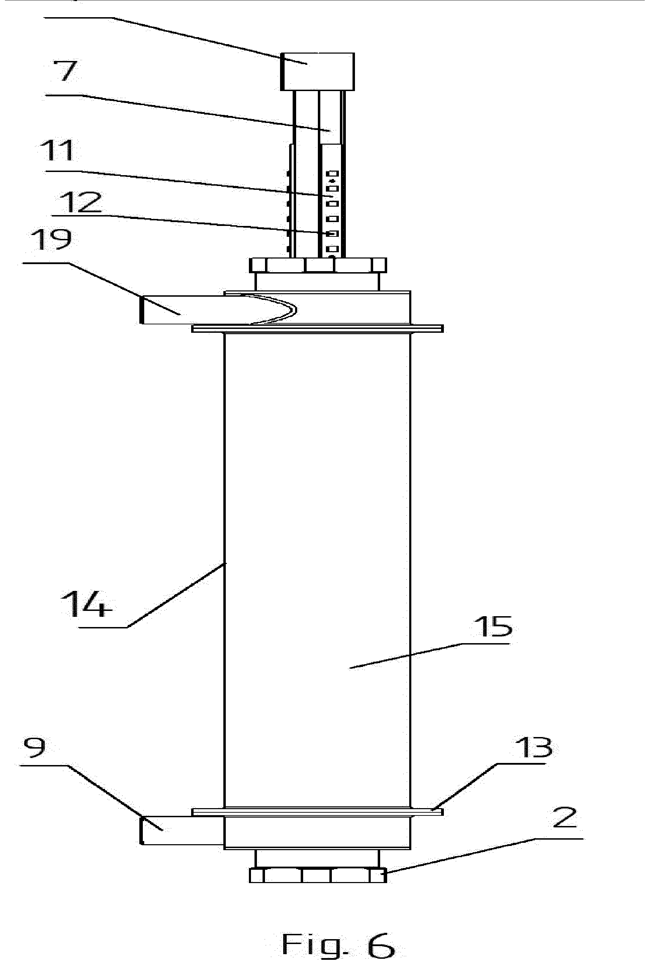

Das UV-Licht wird mittels einer UV-Lichtquelle 21 (siehe Fig. 6) erzeugt, die lösbar im Reaktorgehäuse 15 montiert, d.h. austauschbar ist. UV-LEDs 11 sind auf entsprechenden Trägermodulen 12 bereitgestellt, welche auf einem stabförmigen Kühlkörper 7 angeordnet sind. Wie in Fig. 4 dargestellt ist, sind in diesem Ausführungsbeispiel drei Trägermodule 12 gleichmäßig um den Umfang des Kühlkörpers 7 herum verteilt. Sie erstrecken sich jeweils entlang der Länge des Kühlkörpers 7 (siehe Fig. 6). Zum Schutz der LEDs 11 und damit als innere Begrenzung des Reaktorraums 16 ist ein Quarzglasrohr 6 vorgesehen, welches die UV-Lichtquelle 21 umgibt.

Die Anzahl und Leistung sowie Position der LEDs 11 sind variierbar und können so der erforderlichen Reinigungs- und Desinfektionsleistung angepasst werden. Die LEDs 11 können UV-Licht unterschiedlicher Wellenlängen im Bereich von 240 bis etwa 400 nm ausstrahlen und können demnach der Desinfektion spezieller Mikroorganismen angepasst werden. Ebenso können die LEDs 11 dimmbar sein. Durch Einstrahlung verschiedener Wellenlängen kann die Desinfektionsleistung verschiedener gleichzeitig im Wasser vorkommender Mikroorganismen erhöht werden. Vorzugsweise ist die UV-Lichtquelle 21 derart variabel aufgebaut, dass sie beispielsweise modular erweiterbar ist. Die stabförmige UV-Lichtquelle 21 kann über eine direkte Verbindung mit Strom versorgt werden oder über Induktion.

In diesem Ausführungsbeispiel erstreckt sich die UV-Lichtquelle 21, d.h. insbesondere der Kühlkörper 7 entlang der gesamt Länge des Reaktorraums 16 auf dessen Mittellängsachse. Die UV-LEDs 11 sind ebenfalls im Wesentlichen entlang der gesamten Länge verteilt angeordnet, sodass die Durchflussstrecke 18 vollständig bestrahlt wird. Das UV-Licht wird von der innenliegenden UV-Lichtquelle 21 radial nach außen in Richtung der Gehäusewandung 14 abgestrahlt. Diese ist auf ihrer inneren Oberfläche vorzugsweise mit einem geeigneten Material, z.B. PTFE, beschichtet, um das UV-Licht diffus zu reflektieren, sodass dieses nach Reflektion erneut auf das Wasser einwirkt.

An beiden Enden des Kühlkörpers 7 sind Schraubflansche 2 vorgesehen, sodass der Kühlkörper durch Festziehen der Schraubflansche 2 an beiden Seiten im Reaktorgehäuse 15 befestigt werden kann. Es versteht sich, dass andere geeignete Befestigungsmechanismen denkbar sind. Durch Lösen der Schraubflansche 2 kann der Kühlkörper 7 mit den darauf angeordneten UV-LEDs 11 aus dem Reaktorgehäuse 15 entnommen werden. Dies erlaubt ein einfaches Austauschen der UV-Lichtquelle 21 ohne weitere Demontage des Reaktors 20. Die Zugänglichkeit des Kühlkörpers 7 von beiden Seiten erlaubt mehr Freiheiten bei der Installation des Reaktors 20 beispielsweise in einem Wasserleitungssystem. Es sind Dichtungen 8 vorgesehen, um den Reaktorraum 16 an den entsprechenden Öffnungen, durch welche die UV-Lichtquelle 21 in das Reaktorgehäuse 15 eingeführt bzw. daraus entnommen werden kann, abzudichten. Das Wechseln der Lichtquelle ist in Fig. 6 veranschaulicht. In der Seitenansicht ist das Reaktorgehäuse 15 mit dem nach oben teilweise herausgezogenen Kühlkörper 7 dargestellt.

Die LEDs 11, insbesondere deren Rückseite erwärmt sich im Betrieb, sodass insbesondere zur Bereitstellung einer ausreichende hohen Strahlungsleistung eine entsprechende Kühlung der LEDs 11 erforderlich ist. Aufgrund der innenliegenden Position der Lichtquelle 21 im Reaktorgehäuse 15 ist keine Luftkühlung z.B. über entsprechende Kühlrippen möglich oder zumindest nicht ausreichend. Der Kühlkörper 7 weist demnach einen Kühlmitteldurchgang 5, 17 auf, über welchen ein flüssiges Kühlmittel durch den Kühlkörper 7 geleitet werden kann. Insbesondere kann so eine Wasserkühlung bereitgestellt werden. In einer nicht zur vorliegenden Erfindung gehörenden Ausführungsform kann das Kühlmittel das zu desinfizierende Wasser selbst sein, welches in einem entsprechenden Kreislauf nicht nur durch den Reaktorraum 16, sondern vorher oder nachher auch durch den Kühlmitteldurchgang 5, 17 geleitet wird. Gemäß der Erfindung ist ein externer Kühlkreislauf mit einem anderen Kühlmittel, welches ebenfalls Wasser sein kann, vorgesehen.

Ein Kühlmitteleingang 3 und ein Kühlmittelausgang 4 sind in einem gemeinsamen Anschlussstück 1 an einem Ende des Kühlkörpers 7 vorgesehen, was das Anschließen eines Kühlkreislaufs und damit auch insgesamt die Wechselbarkeit der UV-Lichtquelle 21 vereinfacht. Das Kühlmittel kann durch den Eingang 3 in einen ersten Kühlmitteldurchgangsabschnitt 5 eingeleitet werden, welcher durch ein innenliegendes Rohr mit einem offen freien Ende gebildet ist, welches in einen zweiten Kühlmitteldurchgangsabschnitt 17 mündet, welcher im Kühlkörper 7 nahe an der Rückseite der LEDs 11 verläuft. Nachdem das Kühlmittel durch den Kühlmitteldurchgangsabschnitt 17 im Wesentlichen entlang der gesamten Länge des Kühlkörpers 7 geströmt ist, kann es durch den Ausgang 4 abgeleitet werden. Auch kann durch diese Anordnung Luft einfach aus dem Kühlmitteldurchgang entweichen.

Durch Vorsehen einer Wasserkühlung kann eine gewünschte Strahlungsleistung erreicht werden, sodass beispielsweise kein zusätzlicher Filter im Reaktor 20 angeordnet werden muss. Gleichzeitig wird jedoch ein einfaches Auswechseln der UV-Lichtquelle 21 ermöglicht. Die stabförmige Gestalt des Trägerkörpers bzw. Kühlkörpers 7 erlaubt eine Verteilung der UV-LEDs 11 zur Erzeugung eines homogenen Strahlungsfeldes im Reaktorraum 16.

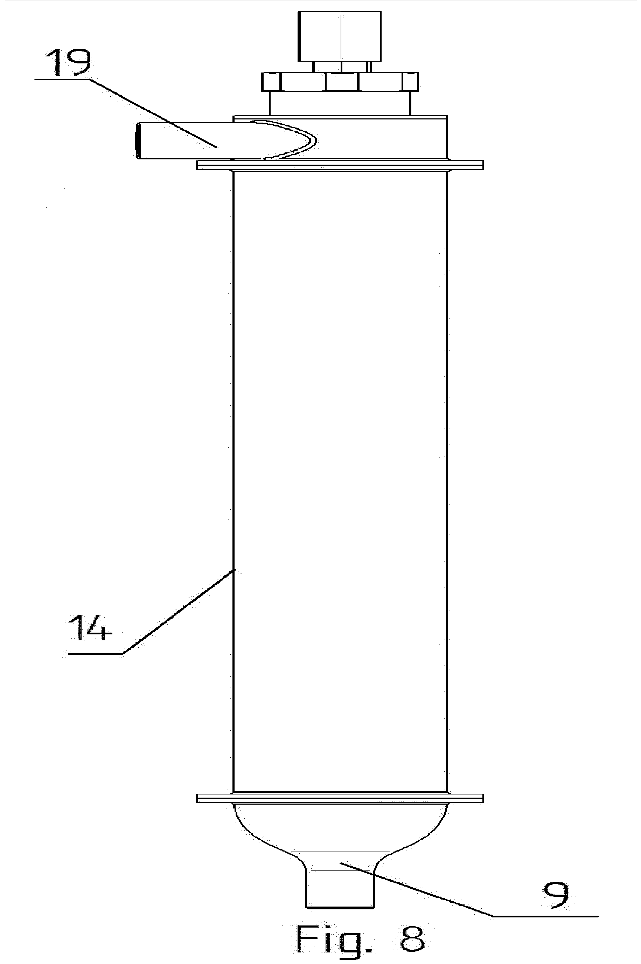

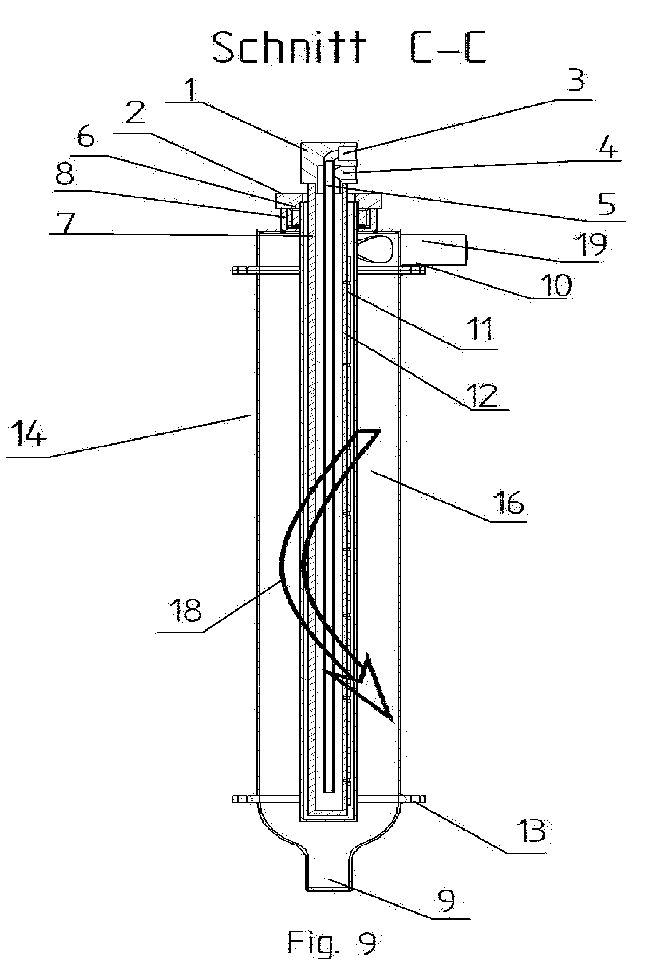

In Fig. 8 und 9 ist ein zweites Ausführungsbeispiel einer Vorrichtung zum Desinfizieren von Fluid dargestellt, welches im Wesentlichen dem ersten Ausführungsbeispiel gleicht. Insofern wird auf obige Ausführungen verwiesen. Das zweite Ausführungsbeispiel unterscheidet sich von dem ersten Ausführungsbeispiel lediglich in der Anordnung des Eingangs und Ausgangs und damit in der Strömung im Reaktorraum 16. Während im ersten Ausführungsbeispiel der Eingang 19 unten und der Ausgang 9 oben angeordnet sind und das zu desinfizierende Fluid in tangentialer Richtung sowohl einströmt als auch ausströmt, ist der Eingang 19 im zweiten Ausführungsbeispiel oben und der Ausgang 9 unten. Es versteht sich, dass in beiden Ausführungsbeispielen Eingang 19 und Ausgang 9 auch vertauscht sein können. Somit kann das Wasser von oben nach unten fließen oder auch umgekehrt, je nachdem wie der Reaktor 20 angeschlossen ist. Ebenfalls ist eine horizontale Anordnung des gesamten Reaktors 20 möglich, sodass das Wasser von links nach rechts oder umgekehrt fließt.

Das zu desinfizierende Fluid strömt in tangentialer Richtung durch den Eingang 19 in den Reaktorraum 16 ein. Jedoch ist der Ausgang 9 entlang der Mittellängsachse angeordnet, sodass das Fluid gerade nach unten aus dem Reaktorraum 16 heraus strömt. Zur Verbesserung der Strömung, insbesondere im Hinblick auf die helikale Strömung 18, ist das Anschlussstück des Ausgangs 9 abgerundet und bildet einen sanften Übergang. Der Querschnitt des Anschlussstücks verringert sich stufenlos in Richtung weg von dem Reaktorgehäuse 15, wobei er an der Verbindungsstelle zum Reaktorgehäuse 15 dem Querschnitt des Reaktorgehäuses 15 entspricht und am freien Ende z.B. dem einer anzuschließenden Leitung.

## Patentansprüche

1. Vorrichtung (20) zum Desinfizieren eines Fluids, insbesondere Wasser, aufweisend:
- ein Reaktorgehäuse (15) mit einem Eingang (19) zum Eintritt und einem Ausgang (9) zum Austritt eines zu desinfizierenden Fluids;
- einen Reaktorraum (16), welcher in dem Reaktorgehäuse (15) gebildet und eingerichtet ist, das zu desinfizierende Fluid aufzunehmen, sodass dieses den Reaktorraum (16) entlang einer Durchflussstrecke (18) vom Eingang (19) zum Ausgang (9) durchströmt;
- eine UV-Bestrahlungseinrichtung (21) mit einer Mehrzahl von UV-LEDs (11);
- einen länglichen Trägerkörper (7), auf dem die UV-LEDs (11) angeordnet sind und der eingerichtet ist, sich zumindest teilweise in das Reaktorgehäuse (15) hinein zu erstrecken, sodass mittels der UV-LEDs (11) UV-Licht zum Desinfizieren des Fluids entlang der Durchflussstrecke in den Reaktorraum einstrahlbar ist; und
- ein Quarzglasrohr (6), welches eingerichtet ist, den Trägerkörper (7) zu umgeben, um einen direkten Kontakt eines zu desinfizierenden Fluids in dem Reaktorraum (16) mit den UV-LEDs (11) zu verhindern;
wobei
- der Trägerkörper (7) in dem Reaktorgehäuse (15) lösbar und wechselbar montiert sowie zusammen mit dem Quarzglasrohr (6) austauschbar ist und einen Kühlmitteldurchgang (5, 17) aufweist, welcher sich durch den Trägerkörper (7) hindurch erstreckt und zum Kühlen der UV-LEDs (11) von einem Kühlmittel durchströmbar ist;
- sich der Kühlmitteldurchgang (5, 17) von einem Kühlmitteleingang (3) zu einem Kühlmittelausgang (4) erstreckt, welche beide an demselben Ende des Trägerkörpers (7) angeordnet sind;
- der Kühlmitteldurchgang einen sich von dem Kühlmitteleingang (3) erstreckenden ersten Abschnitt (5) und einen sich zu dem Kühlmittelausgang (4) hin erstreckenden zweiten Abschnitt (17) umfasst, wobei der erste Abschnitt (5) zumindest teilweise im Inneren des zweiten Abschnitts (17) verläuft; und
- ein externer Kühlkreislauf zum Kühlen bereitgestellt ist, welcher über einen Wärmetauscher mit dem zu desinfizierenden Fluid verbunden ist, um so die Wärme abzutransportieren.

2. Vorrichtung nach Anspruch 1, wobei der Trägerkörper (7) zumindest teilweise aus einem wärmeleitfähigen Material gebildet ist, sodass im Betrieb entstehende Wärme von den UV-LEDs (11) auf ein Kühlmittel übertragbar ist, welches den Kühlmitteldurchgang (5, 17) durchströmt.

3. Vorrichtung nach Anspruch 1 oder 2, wobei der Trägerkörper (7) derart in dem Reaktorgehäuse (15) montiert ist, dass er sich zumindest teilweise im Inneren des Reaktorgehäuses (15) beabstandet von einer Reaktorgehäusewandung (14) erstreckt, sodass UV-Licht von den UV-LEDs (11) in Richtung der Reaktorgehäusewandung (14) abstrahlbar ist.

4. Vorrichtung nach Anspruch 3, wobei sich der Trägerkörper (7) entlang einer Mittellängsachse des Reaktor-raums (16) erstreckt.

5. Vorrichtung nach mindestens einem der vorhergehenden Ansprüche, wobei sich der Trägerkörper (7) in einer Längsrichtung vollständig durch das Reaktorgehäuse (15) hindurch erstreckt.

6. Vorrichtung nach Anspruch 5, wobei der Trägerkörper (7) stabförmig ausgebildet ist.

7. Vorrichtung nach mindestens einem der vorhergehenden Ansprüche, wobei
- das Reaktorgehäuse (15) als Durchflussrohr ausgebildet ist und
- der Eingang (19) an einem ersten Ende des Durchflussrohrs und der Ausgang (9) an einem gegenüberliegenden zweiten Ende des Durchflussrohrs angeordnet sind.

8. Vorrichtung nach einem der vorhergehenden Ansprüche, wobei zumindest einer des Eingangs (19) und des Ausgangs (9) derart seitlich an dem Reaktorgehäuse (15) angeordnet ist, dass ein zu desinfizierendes Fluid derart durch den Reaktorraum (16) strömt, dass die Durchflussstrecke (18) zumindest teilweise spiralförmig um den Trägerkörper (7) herum verläuft.

9. Vorrichtung nach Anspruch 8, wobei sowohl der Eingang (19) als auch der Ausgang (9) seitlich an dem Reaktorgehäuse (15) derart angeordnet sind, dass ein zu desinfizierendes Fluid in zumindest teilweise tangentialer Richtung in den Reaktorraum (16) einströmt, oder der andere des Eingangs (19) und des Ausgangs (9) entlang einer Mittellängsachse des Reaktorraums (16) verläuft.

10. Vorrichtung nach Anspruch 8 oder 9, wobei der Eingang (19) und / oder der Ausgang (9) in einem entsprechenden Anschlussstück gebildet ist bzw. sind, welches eine sich entlang der Strömungsrichtung stufenlos ändernde Querschnittsfläche aufweist.

11. Vorrichtung nach mindestens einem der vorhergehenden Ansprüche, wobei eine an den Reaktorraum (16) grenzende Oberfläche des Reaktorgehäuses (15) zumindest teilweise aus einem UV-Licht diffus reflektierenden Material gebildet ist.

12. Vorrichtung nach einem der vorhergehenden Ansprüche, aufweisend zumindest einen UV-Sensor zum Erfassen einer Strahlungsintensität des von den UV-LEDs abgestrahlten UV-Lichts sowie eine Auswerteeinheit, welche eingerichtet ist, die Strahlungsintensität in Abhängigkeit eines Signals des zumindest einen UV-Sensors zu steuern.

## Claims

1. A device (20) for disinfecting a fluid, in particular water, having:
- a reactor housing (15) with an inlet (19) for the ingress and an outlet (9) for the discharge of a fluid to be disinfected;
- a reactor chamber (16) which is formed in the reactor housing (15) and is configured to receive the fluid to be disinfected so that the fluid flows through the reactor chamber (16) along a flow path (18) from the inlet (19) to the outlet (9);
- a UV irradiation device (21) with a plurality of UV LEDs (11);
- an elongated support element (7) on which the UV LEDs (11) are disposed and which is configured to extend at least partially into the reactor housing (15) so that by means of the UV LEDs (11), UV light can be emitted into the reactor chamber in order to disinfect the fluid along the flow path; and
- a quartz glass tube (6) which is configured to surround the support element (7) in order to prevent direct contact of a fluid to be disinfected with the UV LEDs (11) in the reactor chamber (16);
wherein
- the support element (7) is releasably and exchangeably mounted in the reactor housing (15) and can be exchanged together with the quartz glass tube (6) and has a coolant passageway (5, 17) which extends through the support element (7) and through which a coolant can flow in order to cool the UV LEDs (11);
- the coolant passageway (5, 17) extends from a coolant inlet (3) to a coolant outlet (4) which are both disposed at the same end of the support element (7);
- the coolant passageway comprises a first section (5) which extends from the coolant inlet (3) and a second section (17) which extends to the coolant outlet (4), wherein at least a portion of the first section (5) runs inside the second section (17); and
- an external coolant circuit is provided for cooling, which is connected to the fluid to be disinfected via a heat exchanger in order to remove the heat in this manner.

2. The device as claimed in claim 1, wherein at least a portion of the support element (7) is formed by a thermally conductive material, so that heat generated from the operation of the UV LEDs (11) can be transferred to a coolant which flows through the coolant passageway (5, 17).

3. The device as claimed in claim 1 or claim 2, wherein the support element (7) is mounted in the reactor housing (15) in a manner such that it extends inside at least a portion of the reactor housing (15) at a distance from a reactor housing wall (14) so that UV light from the UV LEDs (11) can be emitted in the direction of the reactor housing wall (14).

4. The device as claimed in claim 3, wherein the support element (7) extends along a central longitudinal axis of the reactor chamber (16).

5. The device as claimed in at least one of the preceding claims, wherein the support element (7) extends in a longitudinal direction through the entire reactor housing (15).

6. The device as claimed in claim 5, wherein the support element (7) is rod-shaped in configuration.

7. The device as claimed in at least one of the preceding claims, wherein
- the reactor housing (15) is configured as a flow tube, and
- the inlet (19) is disposed at a first end of the flow tube and the outlet (9) is disposed at an opposite second end of the flow tube.

8. The device as claimed in one of the preceding claims, wherein at least one of the inlet (19) and the outlet (9) is disposed laterally on the reactor housing (15) so that a fluid to be disinfected flows through the reactor chamber (16) in a manner such that at least a portion of the flow path (18) passes around the support element (7) in a substantially spiral shape.

9. The device as claimed in claim 8, wherein both the inlet (19) as well as the outlet (9) are disposed laterally on the reactor housing (15) in a manner such that a fluid to be disinfected flows into the reactor chamber (16) in a direction which is at least partially tangential, or the other of the inlet (19) and the outlet (9) runs along a central longitudinal axis of the reactor chamber (16).

10. The device as claimed in claim 8 or claim 9, wherein the inlet (19) and/or the outlet (9) is or are formed in a corresponding connection piece which has a continuously varying cross-sectional surface along the direction of flow.

11. The device as claimed in at least one of the preceding claims, wherein at least a portion of a surface of the reactor housing (15) bordering the reactor chamber (16) is formed from a material which diffusely reflects UV light.

12. The device as claimed in one of the preceding claims, having at least one UV sensor for detecting a radiation intensity for the UV light emitted by the UV LEDs as well as an analysis unit which is configured to control the radiation intensity as a function of a signal from the at least one UV sensor.

## Revendications

1. Dispositif (20) destiné à désinfecter un fluide, notamment de l'eau, comportant :
- un boîtier de réacteur (15) pourvu d'une entrée (19) pour l'admission et d'une sortie (9) pour l'évacuation d'un fluide à désinfecter;
- une chambre de réacteur (16), laquelle est constituée dans le boîtier de réacteur (15) et configurée pour recevoir le fluide à désinfecter, de telle sorte que celui-ci traverse la chambre de réacteur (16) le long d'un trajet de passage (18), de l'entrée (19) vers la sortie (9) ;
- un système d'irradiation aux UV (21) pourvu d'une pluralité de von LED à UV (11) ;
- un corps porteur (7) allongé, sur lequel sont placés les LED à UV (11) et qui est configuré pour s'étendre au moins partiellement à l'intérieur du boîtier de réacteur (15), de telle sorte qu'au moyen des LED à UV (11), de la lumière UV puisse être irradiée le long du trajet de passage dans la chambre de réacteur, pour désinfecter le fluide ; et
- un tube en verre quartzeux (6), lequel est configuré pour entourer le corps porteur (7), pour empêcher un contact direct d'un fluide à désinfecter dans la chambre de réacteur (16) avec les LED à UV (11) ;
- le corps porteur (7) étant monté de manière amovible et interchangeable dans le boîtier de réacteur (15) et étant remplaçable conjointement avec le tube en verre quartzeux (6) et comportant un passage d'agent réfrigérant (5, 17), lequel s'étend à travers le corps porteur (7) et pour refroidir les LED à UV (11) pouvant être traversé par un agent réfrigérant ;
- le passage (5, 17) d'agent réfrigérant s'étendant d'une entrée (3) d'agent réfrigérant vers une sortie (4) d'agent réfrigérant qui sont toutes deux placées sur la même extrémité du corps porteur (7) ;
- le passage d'agent réfrigérant comprenant un premier segment (5) s'étendant à partir de l'entrée (3) d'agent réfrigérant et un deuxième segment (17) s'étendant vers la sortie (4) d'agent réfrigérant, le premier segment (5) s'écoulant au moins partiellement à l'intérieur du deuxième segment (17) ; et
- un circuit de refroidissement externe étant mis à disposition pour refroidir, qui par l'intermédiaire d'un échangeur thermique est relié avec le fluide à désinfecter pour évacuer ainsi la chaleur.

2. Dispositif selon la revendication 1, le corps porteur (7) étant constitué au moins partiellement en une matière conductrice de chaleur, de telle sorte que de la chaleur produite en service soit transmissible par les LED à UV (11) à un agent réfrigérant qui circule à travers le passage (5, 17) d'agent réfrigérant.

3. Dispositif selon la revendication 1 ou 2, le corps porteur (7) étant monté dans le boîtier de réacteur (15), de sorte à s'étendre au moins partiellement à l'intérieur du boîtier de réacteur (15), avec un écart par rapport à une paroi (14) de boîtier de réacteur, de manière à ce que de la lumière UV puisse être émise par les LED à UV (11) en direction de la paroi (14) de boîtier de réacteur.

4. Dispositif selon la revendication 3, le corps porteur (7) s'étendant le long d'un axe longitudinal médian de la chambre de réacteur (16).

5. Dispositif selon au moins l'une quelconque des revendications précédentes, dans une direction longitudinale, le corps porteur (7) s'étendant totalement à travers le boîtier de réacteur (15).

6. Dispositif selon la revendication 5, le corps porteur (7) étant conçu en forme de baguette.

7. Dispositif selon au moins l'une quelconque des revendications précédentes,
- le boîtier de réacteur (15) étant conçu sous la forme d'un tube de circulation et
- l'entrée (19) étant placée sur une première extrémité du tube de circulation et la sortie (9) étant placée sur une deuxième extrémité opposée du tube de circulation.

8. Dispositif selon l'une quelconque des revendications précédentes, au moins l'une parmi l'entrée (19) et la sortie (9) étant placée latéralement sur le boîtier de réacteur (15), de telle sorte qu'un fluide à désinfecter circule à travers la chambre de réacteur (16) de manière à ce que le trajet de passage (18) s'écoule au moins partiellement sous forme hélicoïdale autour du corps porteur (7).

9. Dispositif selon la revendication 8, aussi bien l'entrée (19) qu'également la sortie (9) étant placées latéralement sur le boîtier de réacteur (15), de telle sorte qu'un fluide à désinfecter afflue dans une direction au moins en partie tangentielle dans la chambre de réacteur (16) ou que l'autre, parmi l'entrée (19) et la sortie (9) s'écoule le long d'un axe longitudinal médian de la chambre de réacteur (16).

10. Dispositif selon la revendication 8 ou 9, l'entrée (19) et / ou la sortie (9) étant constituée ou constituées en une pièce de raccordement correspondante, laquelle comporte une surface de section transversale qui se modifie progressivement le long de la direction de circulation.

11. Dispositif selon au moins l'une quelconque des revendications précédentes, une surface du boîtier de réacteur (15) adjacente à la chambre de réacteur (16) étant constituée au moins en partie en une matière réfléchissant de manière diffuse de la lumière UV.

12. Dispositif selon l'une quelconque des revendications précédentes, comportant au moins un capteur d'UV, destiné à détecter une intensité de rayonnement de la lumière UV émise par les LED à UV, ainsi qu'une unité d'évaluation qui est configurée pour commander l'intensité de rayonnement en fonction d'un signal de l'au moins un capteur d'UV.
